(19)

Europäisches
Patentamt

European
Patent Office

Office européen
des brevets

(11) **EP 4 546 281 A1**

(12) **EUROPEAN PATENT APPLICATION**

(43) Date of publication:
**30.04.2025 Bulletin 2025/18**

(21) Application number: **23205632.5**

(22) Date of filing: **24.10.2023**

(51) International Patent Classification (IPC):
**G06V 10/82** (2022.01)

(52) Cooperative Patent Classification (CPC):
**G06V 20/64; G06V 10/82;** G06V 10/469;
G06V 2201/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Tatarchenko, Maxim
10115 Berlin (DE)**
• **Öcal, Melis
1093 DM Amsterdam (NL)**
• **Karaoglu, Sezer
1087MC Amsterdam (NL)**
• **Gevers, Theo
1091HR Amsterdam (NL)**

(54) **DEVICE AND METHOD FOR TRAINING A MODEL FOR DETERMINING A SHAPE OF AN OBJECT, METHOD FOR OPERATING A COMPUTER CONTROLLED MACHINE DEPENDING ON A SHAPE OF AN OBJECT**

(57)   Device and computer implemented method for training a model, in particular a neural network (200), for determining a shape of an object, wherein the method comprises determining (212) a first point cloud representation (214) of the object depending on a first digital image (204), wherein the first point cloud representation (214) comprises points that represent a first view (206) of the object, determining (216) a second point cloud representation (218) of the object depending on the second digital image (208), wherein the second point cloud representation (218) comprises points that represent a second view (210) of the object, determining (220) a first voxel representation (222) of the object depending on the first point cloud representation (214), wherein the first voxel representation (222) comprises voxels that represent the first view (206), mapping (228) the first voxel representation (222) with the model to a voxel representation (202) of the shape, providing (230) a ground truth (232) for training the model depending on the first point cloud representation (214) and the second point cloud representation (218) or depending on the first voxel representation (222) and a second voxel representation (226), wherein the second voxel representation (226) of the object is determined depending on the second point cloud representation (218), wherein the second voxel representation (226) comprises voxels that represent the second view (210), wherein the ground truth (232) is a voxel representation that comprises the voxels of the first voxel representation (222) and the second voxel representation (226). Device and computer implemented method for operating a computer controlled machine depending on the shape.

Fig. 2

EP 4 546 281 A1

**Description**

Background

The invention relates to a device, and a method for training a model, in particular a neural network, for determining a shape of an object, and a method for operating a computer controlled machine depending on a shape of an object.

Disclosure of the invention

A computer implemented method for training a model, in particular a neural network, for determining a shape of an object, comprises determining a first point cloud representation of the object depending on a first digital image, wherein the first point cloud representation comprises points that represent a first view of the object, determining a second point cloud representation of the object depending on the second digital image, wherein the second point cloud representation comprises points that represent a second view of the object, determining a first voxel representation of the object depending on the first point cloud representation, wherein the first voxel representation comprises voxels that represent the first view, mapping the first voxel representation with the model to a voxel representation of the shape, providing a ground truth for training the model depending on the first point cloud representation and the second point cloud representation or depending on the first voxel representation and a second voxel representation, wherein the second voxel representation of the object is determined depending on the second point cloud representation, wherein the second voxel representation comprises voxels that represent the second view, wherein the ground truth is a voxel representation that comprises the voxels of the first voxel representation and the second voxel representation. This provides a model for determining a shape of an object from noisy real-world digital images.

The model may be a diffusion model that is configured to remove noise from a noisy input of the diffusion model, wherein the diffusion model is configured to output the voxel representation of the shape, wherein the noisy input has a plurality of input elements, wherein the noisy input comprises elements that represent the first voxel representation of the object, and elements that represent noise, in particular noise that is randomly sampled from a distribution, wherein the elements that represent the first voxel representation are undisturbed, in particular comprise no additional noise.

The method may comprise determining a depth image of the object depending on the voxel representation of the shape of the object, providing a pseudo ground truth depth image, and training the model depending on a difference between the depth image and the ground truth depth image. This improves the model further.

Providing the pseudo ground truth depth image may comprise determining the pseudo ground truth depth image of the object depending on the first digital image and the second digital image, in particular mapping the first digital image and the second digital image with a first artificial neural network, to the pseudo ground truth depth image of the object, wherein the first artificial neural network is configured to map the first digital image to the pseudo ground truth depth image.

Providing the pseudo ground truth depth image may comprise providing a training data-point comprising the first digital image, and the pseudo ground truth depth image.

The method may comprise determining a silhouette image of the object depending on the voxel representation of the shape of the object, providing a ground truth silhouette image, and training the model depending on a difference between the silhouette image and the ground truth silhouette image. This improves the model further.

Providing the ground truth silhouette image may comprise providing a training data-point comprising the first digital image, and the ground truth silhouette image.

A computer implemented method for operating a computer controlled machine, in particular a robot, a vehicle, a domestic appliance, a power tool, a manufacturing machine, a personal assistant or an access control system, comprises capturing a digital image, in particular with a sensor, determining a point cloud representation of an object depending on the digital image, wherein the point cloud representation comprises points that represent a view of the object, determining a voxel representation of the object depending on the point cloud representation, wherein the voxel representation comprises voxels that represent the view, mapping the voxel representation with a model, in particular a neural network to a voxel representation of the shape, determining the shape depending on the voxel representation of the shape, in particular with an artificial neural network that is configured to map the voxel representation of the shape to the shape, and operating the computer controlled machine depending on the shape.

A device for operating a computer controlled machine or for training a model, in particular a neural network, for operating a computer controlled machine, comprises at least one processor, at least one memory, wherein the at least one processor is configured to execute instructions that, when executed by the at least one processor cause the device to execute a method, wherein the at least one memory comprises the instructions.

A computer program, comprises computer readable instructions that, when executed by a computer, cause the computer to execute a method.

Further embodiments are derived from the following description and the drawing. In the drawing:

Fig. 1 schematically depicts a device,
Fig. 2 schematically depicts steps in a method for training a neural network for determining a shape of an object,
Fig. 3 schematically depicts steps in a method for operating a computer controlled machine depending on a shape of an object.

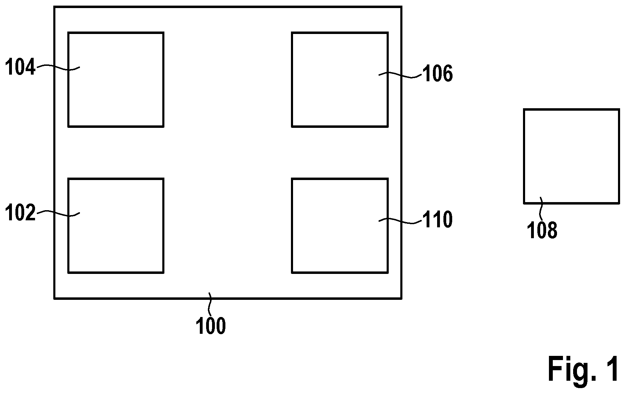

Figure 1 schematically depicts a device 100. The device 100 comprises at least one processor 102, at least one memory 104. The at least one memory 104 may comprise is non-transitory memory. The at least one memory 104 may comprise transitory memory.

The device 100 is configured to process digital images. The digital images may be captured with a sensor 106 or received from a sensor 106 or read from the at least one memory 104.

The sensor 106 may be arranged outside of the device 100. The device 100 may comprise an interface for the sensor 106. The device 100 according to the example comprises the sensor 106. The sensor 106 is configured to capture a digital image. The sensor 106 may be a camera, a radar sensor, a LiDAR sensor, an ultrasound sensor, an infrared sensor, or a motion sensor. The digital image may be a visual image, a radar image, a LiDAR image, an ultrasound image, an infrared image, or a motion image.

According to an example, the digital image has three color channels, e.g., red, green, blue, of size N. According to an example, the digital image has pixels that are associated with a depth value indicative of a distance between a sensor for capturing the digital image and an object that the pixel represents in the digital image.

The device 100 is configured to operate a computer controlled machine 108. The device 100 is configured to operate the computer controlled machine 108 depending on the digital image. The sensor 106 is configured to capture the digital image in an environment of the computer controlled machine 108.

The computer controlled machine 108 may be a robot, a vehicle, a domestic appliance, a power tool, a manufacturing machine, a personal assistant or an access control system.

The at least one processor 102 is configured to execute a method for operating the computer controlled machine 108.

The device 100 may be part of the computer controlled machine 108. The device 100 may be configured to actuate an actuator 110 for moving the computer controlled machine 108. The actuator 110 may be arranged outside of the device 100. The device 100 may comprise an interface to the actuator 110. The device 100 in the example comprises the actuator 110.

The actuator 110 may be configured to move the robot, or the vehicle or the power tool, or the manufacturing machine or a part thereof. The actuator 110 may be configured to move a part of the domestic appliance, the personal assistant or the access control system.

The device 100 may be configured to actuate the actuator 110 to move the robot, or the vehicle or the power tool, or the manufacturing machine or a part thereof. The device 100 may be configured to actuate the actuator 110 to move a part of the domestic appliance, the personal assistant or the access control system.

The digital image may comprise at least a part of an object.

The device 100 may be configured to determine a shape of the object depending on the digital image. The device 100 may be configured to determine a target position for the computer controlled machine 108 or a part thereof depending on the shape of the object. The device 100 may be configured to move the computer controlled machine 108 or the part thereof to the target position.

For example, the device 100 may be configured determine the target position that avoids a collision with the object and to move the robot or the vehicle to the target position that avoids the collision with the object.

The object may be a traffic participant. The digital image may comprise a first part of the traffic participant without second part of the traffic participant. The shape of the object may be the shape of the traffic participant including the second part. The target position may be a position that avoids the position of the second part. This means, the target position is determined to avoid the collision with the second part that is invisible in the digital image.

The part of the robot may be configured to grab the object. For example, the device 100 may be configured to determine the target position to grab the object and to move the part of the robot, that is configured to grab the object, to the target position to grab the object.

The object may be a cup with a handle. The digital image may comprise a part of the cup without the handle. The shape of the object may be the shape including the handle. The target position may be the position of the handle. This means, the target position is determined to grab the cup at the handle that is invisible in the digital image.

Given a noisy partial real-world point cloud of an object, the aim of the method is to complete its 3D shape by predicting the geometry of the unobserved parts with a model.

A completion task is formulated as a conditional generation problem that produces the complete shape given the input partial point cloud as a condition.

The problem of shape completion is multimodal by its nature. In the example, the model is a denoising diffusion probabilistic model (DDPM).

The model enables the generation of multiple plausible completions for a single incomplete point cloud, while effectively learning category-specific shape priors solely from partial real-world data without considering complete shapes during the training process.

To overcome the limitations of working with noisy observations without resorting to training on synthetic data, the method may make use of additional geometric cues including depth and silhouette information.

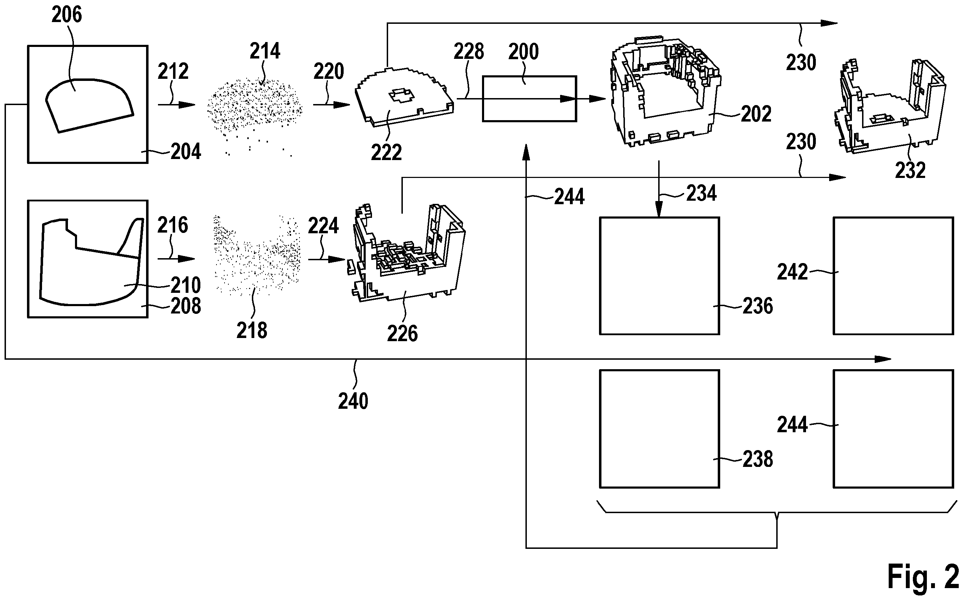

Figure 2 schematically depicts steps in a method for training the model, in particular a neural network 200, for determining a voxel representation 202 of a shape of an object depending on a first digital image 204 comprising a first view 206 of the object and a second digital image 208 comprising a second view 210 of the object. According to an example, the voxel representation 202 of the shape is a three-dimensional reconstruction of the shape. The method is not limited to two views. A number V of views may be used, wherein V is two or larger than two.

The method is used for determining a shape representation, i.e., the voxel representation 202, from point cloud representations. This means, the method uses a transformation from a point cloud to a voxel grid, e.g., with a fixed deterministic algorithm, in particular in a data pre-processing. According to an example, the shape representation is a shape distribution that is learned from real-world observations, i.e., the first digital image 204 and the second digital image 208 of a real-world object.

Learning the shape representation poses a significant challenge, primarily due to the presence of significant noise in the data of the digital images arising from inaccurate sensor measurements, occlusions, and errors involved in the segmentation of objects from three-dimensional scenes or images. The method requires no synthetic data, i.e., no clean synthetic shape of the object.

The method for training comprises a step 212.

The step 212 comprises determining a first point cloud representation 214 of the object depending on the first digital image 204. The first point cloud representation 214 comprises points that represent the first view 206. The first digital image 204 is a real-world digital image, i.e., not a synthetic digital image.

The method for training comprises a step 216.

The step 216 comprises determining a second point cloud representation 218 of the object depending on the second digital image 208. The second point cloud representation 218 comprises points that represent the second view 210. The second digital image 208 is a real-world digital image, i.e., not a synthetic digital image.

The first point could representation 214 is for example a first noisy point cloud $p_{v_1} \in R^{N \times 3}$, wherein N is the size of the first point cloud. The second point cloud representation 218 is for example a second noisy point cloud $p_{v_2} \in R^{M \times 3}$, wherein M is the size of the second point cloud. The first noisy point cloud $p_{v_1}$ and the second noisy point cloud $p_{v_2}$ show the object for example from two different viewpoints.

The method for training comprises a step 220.

The step 220 comprises determining a first voxel representation 222 of the object depending on the first point cloud representation 214. The first voxel representation 222 comprises voxels that represent the first view 206.

The method for training comprises a step 224.

The step 224 comprises determining a second voxel representation 226 of the object depending on the second point cloud representation 218. The second voxel representation 226 comprises voxels that represent the second view 210.

To simplify the three-dimensional data processing, for example, the first point cloud representation 214, e.g. the noisy point cloud $p_{v_1}$, is voxalized into the first voxel representation 222, e.g. an occupancy grid that comprises voxels. Each voxel stores a binary value stating with a value TRUE, that at least one point of the noisy point cloud $p_{v_1}$ falls into that voxel, i.e., that the voxel is occupied, and with a value FALSE, that no point of the noisy point cloud $p_{v_1}$ falls into that voxel, i.e., that the voxel is unoccupied. The voxel representations is not limited to a binary voxel representation. Other values as TRUE and FALSE may be used alike.

According to an example, the first voxel representation 222 is an input $x_0 = (c_0, \tilde{x}_0)$ wherein $c_0$ represents occupied voxels, and $\tilde{x}_0$ denotes unoccupied voxels.

The method for training comprises a step 228.

The step 228 comprises mapping the first voxel representation 222 with the model to the voxel representation 202 of the shape.

According to an example, the model is a diffusion model $f_\theta$ that is configured to remove noise from a noisy input of the diffusion model. The diffusion model $f_\theta$ according to the example, is configured to output the voxel representation 202 of the shape.

The noisy input according to an example has a plurality of input elements. The noisy input according to an example comprises elements that represent the first voxel representation 222 of the object and elements that represent noise. The noise is for example random noise that is sampled from a distribution. The elements that represent the first voxel representation 222 are undisturbed, i.e., no noise is added to the elements that represent the first voxel representation 222.

According to an example, a forward pass of the diffusion model $f_\theta$ is a Markov chain, which gradually adds Gaussian noise to corrupt the unoccupied voxels $\tilde{x}_0$ into a standard Gaussian distribution $\tilde{x}_T$ in $T$ time steps according to a variance schedule $\beta_1, ..., \beta_T$. Then the Markov chain and the Gaussian transition probabilities at each time step can be formulated as

$$q(\tilde{x}_{0:T}, T) = q(\tilde{x}_0) \prod_{t=1}^{T} q(\tilde{x}_t | \tilde{x}_{t-1})$$

$$q(\tilde{x}_t, \tilde{x}_{t-1}) = N\left(\sqrt{1 - \beta_t}\, \tilde{x}_{t-1}, \beta_t I\right)$$

Here, N is a normal distribution, I a unity matrix of appropriate dimension, and the forward process is independent of the conditioning factor $c_0$ that represents occupied voxels.

According to an example, the reverse process is defined as a Markov chain with learned Gaussian transitions which aim to iteratively remove the noise added in the forward process. The reverse process is conditioned in the example on the conditionig factor $c_0$ that represents occupied voxels:

$$p_\theta(\tilde{x}_{0:T}, c_0) = p(\tilde{x}_T) \prod_{t=1}^{T} p_\theta(\tilde{x}_{t-1} | \tilde{x}_t, c_0)$$

$$p_\theta(\tilde{x}_{t-1}, \tilde{x}_t, c_0) = N(\mu_\theta(\tilde{x}_t, c_0, t), \sigma_t^2 I)$$

Here, $p(\tilde{x}_T)$ is a Gaussian prior, $\theta$ are parameters of the diffusion model $f_\theta$, $\mu_\theta$ is a mean value and $\sigma_t^2$ a variance of a normal distribution N that are estimated e.g., by the neural network 200.

The method for training comprises a step 230.

The step 230 comprises providing a ground truth 232 for the training. The ground truth 232 in the example is a voxel representation, e.g., an occupancy grid that comprises voxels.

According to an example, the ground truth 232 is determined depending on the first point cloud representation 214 and the second point cloud representation 218. For example, the first point cloud representation 214, e.g., the first noisy point cloud $p_{v_1}$, and the second point cloud representation 218, e.g., the second noisy point cloud $p_{v_2}$ are concatenated to a ground truth point cloud representation $p_{GT} = (p_{v_1}, p_{v_2}) \in R^{(N+M) \times 3}$. The ground truth 232 voxel representation is determined depending on the ground truth point cloud representation $p_{GT}$. For example, the ground truth 232 voxel representation comprises voxels. Each voxel of the ground truth 232 voxel representation stores a binary value stating with a value TRUE, that at least one point of the ground truth point cloud representation $p_{GT}$ falls into that voxel, i.e., that the voxel is occupied, and with a value FALSE, that no point of the ground truth point cloud representation $p_{GT}$ falls into that voxel, i.e., that the voxel is unoccupied. The voxel representations is not limited to a binary voxel representation. Other values as TRUE and FALSE may be used alike.

According to an example, the ground truth 232 is determined depending on the first voxel representation 222 and the second voxel representation 226.

According to an example, the voxels of the first voxel representation 222 and the second voxel representation 226 are concatenated into the ground truth 232 voxel representation.

The method for training comprises a step 234.

The step 234 comprises determining a depth image 236 of the object depending on the voxel representation 202 of the shape of the object.

For example, the depth image 236 comprises a depth map that is rendered using the occupancy grid of the voxel representation 202 of the shape:

$$D(r) = \sum_{i=1}^{M} T_i (1 - \exp(-\sigma_i \delta_i))\, t_i$$

wherein $t_i$ denotes a distance of the point from the origin of a sensor, e.g., a camera, from which a ray r is projected.

For example a pre-trained Omnidata model is used to determine the depth map as described in Rundi Wu, Xuelin Chen, Yixin Zhuang, and Baoquan Chen. Multimodal shape completion via conditional generative adversarial networks. In Proceedings of the European Conference on Computer Vision (ECCV), 2020.

The step 234 comprises determining a silhouette image 238 of the object depending on the voxel representation 202 of the shape of the object.

This means, for example, a two-dimensional silhouette image 238 is determined with volumetric rendering of the three-dimensional reconstruction of the shape.

Hence, to render a silhouette pixel, M points are sampled along its ray r. For each of the three-dimensional points $m_i$, its occupancy value $\hat{o}_l$ may be obtained from the occupancy grid trough trilinear interpolations:

$$\hat{o}_l = interp\big(m_i, f_\theta(\tilde{x}_t, c_0, t)\big)$$

where *interp* is the interpolation function, wherein the interpolated occupancy acts directly as the volume density $\hat{o}_l = \sigma(m_i)$. For example, the densities are accumulated by numerical integration:

$$S(r) = \sum_{i=1}^{M} T_i(1 - \exp(-\sigma_i\delta_i))\,\hat{o}_l$$

where $T_i = \exp\big(-\sum_{j=1}^{i-1}\sigma_j\delta_j\big)$ is the accumulated transmittance of a sampe point along the ray r and $\delta_i$ is the distance between neighboring sample points.

Since two views $v_1$ and $v_2$ are used to form the ground truth occupancy grid, the silhouettes are also rendered for the same viewpoints.

The method for training comprises a step 240.

The step 240 comprises providing a pseudo ground truth depth image 242 of the object depending on the first digital image 204. The first digital image 204 may be mapped with a first artificial neural network to the pseudo ground truth depth image 242 of the object. The first artificial neural network may be configured to map a digital image to a depth image.

The step 240 comprises providing a ground truth silhouette image 244 of the object depending on the first digital image 204. The first digital image 204 may be mapped with a second artificial neural network to the ground truth silhouette image 244 of the object. The second artificial neural network may be configured to map a digital image to a silhouette image.

According to an example, the first digital image 204, the second digital image 208, the pseudo ground truth depth image 242, and the ground truth silhouette image 244 are provided as a data-point of training data.

The training data may comprise a plurality of data-points.

The steps of the method for training may be executed for the plurality of data-points, wherein for each data-point, a plurality of voxel representations 202, and a plurality of depth images 236, and a plurality of silhouette images 238 is determined that is associated with the respective data-point.

The method for training comprises a step 244.

The step 244 comprises determining parameters of the model, e.g. weights of the neural network 200, depending on a loss. The loss in the example depends on a difference between the voxel representation 202 of the shape and the ground truth 232, and the difference between the depth image 236 and the pseudo ground truth depth image 242, and the difference between the silhouette image 238 and the ground truth silhouette image 244 that is determined for at least one pair of the first digital image 204 and the second digital image 208.

The diffusion model $f_\theta(\tilde{x}_t, c_0, t)$ is for example trained by predicting the noise added or predicting the unoccupied voxels $\tilde{x}_0$ depending on, e.g., to minimize, a binary cross-entropy loss $L_e$ between the predicted and the ground truth occupancy probabilities

$$L_e\big(f_\theta(\tilde{x}_t, c_0, t), x_{gt}\big)$$

wherein $x_{gt}$ is the ground truth for the input $\tilde{x}_t$. Since the occupied voxels $c_0$ are unaffected in the training, the regions of the occupied voxels $c_0$ are masked out in the training, i.e., not considered for determining the cross-entropy loss.

The objects shape silhouette is constrained in the example to match the ground truth silhouette.

The diffusion model $f_\theta(\tilde{x}_t, c_0, t)$ is for example trained depending on a loss, e.g., to minimize the $L_s$ loss:

$$L_s = \frac{1}{V} \sum_{j=1}^{V} \left| \hat{S}_{v_j} - S_{v_j} \right|_1$$

wherein $\hat{S}_{v_j}$ represents the two-dimensional silhouette image 238, and $S_{v_j}$ represents the ground truth silhouette image 244, and $V$ denotes the number of views used.

Although individual silhouette images may lack adequate information, the presence of multiple silhouette images belonging to distinct instances of the same shape shows advantages in learning object shapes.

Learning the object shape is further improved by the depth image 236, e.g., the depth map, and the pseudo ground truth depth image 242.

The diffusion model $f_\theta(\bar{x}_t, c_0, t)$ is for example trained depending on a scale-invariant loss function $L_d$, e.g., to minimize the loss function:

$$L_d = \frac{1}{V} \sum_{j=1}^{V} \left| \left( w \hat{D}_{v_j} + q \right) - D_{v_j} \right|_1$$

wherein $\hat{D}_{v_j}$ represents the depth image 236, e.g., the rendered depth map, wherein $D_{v_j}$ represents the pseudo ground truth depth image 242, e.g., a ground truth depth map, w and q are scale and shift parameters to align $\hat{D}_{v_j}$ and $D_{v_j}$.

The parameters w and q may be solved with a least-squares optimization.

The diffusion model $f_\theta(\bar{x}_t, c_0, t)$ is for example trained depending a combined loss:

$$L = L_e + L_d$$

or

$$L = L_e + L_s$$

or

$$L = L_e + L_d + L_s$$

The combined loss may comprise weighting factors for the loss terms in the combined loss.

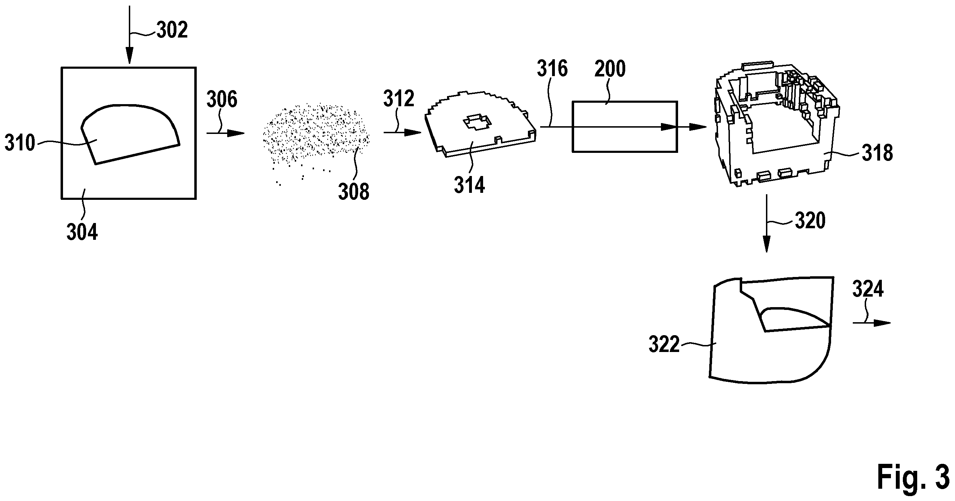

Figure 3 schematically depicts steps in a method for operating the computer controlled machine 108 depending on a shape of an object.

The method for operating the computer controlled machine 108 comprises a step 302.

The step 302 comprises capturing a digital image 304, for example with the sensor 106.

The method for operating the computer controlled machine 108 comprises a step 306.

The step 306 comprises determining a point cloud representation 308 of an object depending on the digital image 304. The point cloud representation 308 comprises points that represent a view 310 of the object.

The method operating the computer controlled machine 108 comprises a step 312.

The step 312 comprises determining a voxel representation 314 of the object depending on the point cloud representation 308. The voxel representation 314 comprises voxels that represent the view 310.

The method for determining the shape comprises a step 316.

The step 316 comprises mapping the voxel representation 314 with the model, e.g. the neural network 200, to a voxel representation 318 of the shape.

The method for determining the shape comprises a step 320.

The step 320 comprises determining the shape depending on the voxel representation 318 of the shape. Figure 3 depicts a perspective view 322 of the shape. The shape is for example determined with an artificial neural network that is configured to map a voxel representation to the shape.

The method for determining the shape comprises a step 322.

The step 322 comprises operating the computer controlled machine 108 depending on the shape.

For example, the target position that avoids a collision with the object is determined and the robot or the vehicle is moved to avoid the target position that avoids the collision with the object.

For example, the object is the traffic participant. The digital image 304 comprises a first part of the traffic participant without second part of the traffic participant. The shape of the object is the shape of the traffic participant including the second part. The target position may be the position that avoids the position of the second part. This means, the target position is determined to avoid the collision with the second part that is invisible in the digital image.

The part of the robot may be configured to grab the object. For example, the target position to grab the object is determined and the part of the robot, that is configured to grab the object, is moved to the target position to grab the object.

The object may be the cup with the handle. The digital image 304 may comprise a part of the cup without the handle. The shape of the object may be the shape including the handle. The target position may be the position of the handle. This means, according to the method, the target position is determined to grab the cup at the handle that is invisible in the digital image.

According to an example, the at least one memory 104 comprises instructions, that are executable by the at least one processor 102 and that, when executed by the at least one processor 102, cause the device 100 to execute the method for training model, e.g. the neural network 200, and/or the method for operating the computer controlled machine 108.

The method for operating the computer controlled machine 108 may comprise training the model, e.g. the neural network, according to the method for training the model.

**Claims**

1. Computer implemented method for training a model, in particular a neural network (200), for determining a shape of an object, **characterized in that** the method comprises determining (212) a first point cloud representation (214) of the object depending on a first digital image (204), wherein the first point cloud representation (214) comprises points that represent a first view (206) of the object, determining (216) a second point cloud representation (218) of the object depending on the second digital image (208), wherein the second point cloud representation (218) comprises points that represent a second view (210) of the object, determining (220) a first voxel representation (222) of the object depending on the first point cloud representation (214), wherein the first voxel representation (222) comprises voxels that represent the first view (206), mapping (228) the first voxel representation (222) with the model to a voxel representation (202) of the shape, providing (230) a ground truth (232) for training the model depending on the first point cloud representation (214) and the second point cloud representation (218) or depending on the first voxel representation (222) and a second voxel representation (226), wherein the second voxel representation (226) of the object is determined depending on the second point cloud representation (218), wherein the second voxel representation (226) comprises voxels that represent the second view (210), wherein the ground truth (232) is a voxel representation that comprises the voxels of the first voxel representation (222) and the second voxel representation (226).

2. The method according to claim 1, **characterized in that** the model is a diffusion model that is configured to remove noise from a noisy input of the diffusion model, wherein the diffusion model is configured to output the voxel representation (202) of the shape, wherein the noisy input has a plurality of input elements, wherein the noisy input comprises elements that represent the first voxel representation (222) of the object, and elements that represent noise, in particular noise that is randomly sampled from a distribution, wherein the elements that represent the first voxel representation (222) are undisturbed, in particular comprise no additional noise.

3. The method according to one of the preceding claims, **characterized in that** the method comprises determining (232) a depth image (236) of the object depending on the voxel representation (202) of the shape of the object, providing (240) a pseudo ground truth depth image (242), and training the model depending on a difference between the depth image (236) and the pseudo ground truth depth image (242).

4. The method according to claim 3, **characterized in that** providing (240) the pseudo ground truth depth image (242) comprises determining the pseudo ground truth depth image (242) of the object depending on the first digital image (204), in particular mapping the first digital image (204) with a first artificial neural network, to the pseudo ground truth depth image (242) of the object, wherein the first artificial neural network is configured to map the first digital image (204) to the pseudo ground truth depth image (242).

5. The method according to claim 3, **characterized in that** providing (240) the pseudo ground truth depth image (242) comprises, providing a training data-point comprising the first digital image (204), and the pseudo ground truth depth image (242).

6. The method according to one of the preceding claims, **characterized in that** the method comprises determining (232) a silhouette image (238) of the object depending on the voxel representation (202) of the shape of the object, providing (240) a ground truth silhouette image (244), and training the model depending on a difference between the silhouette image (238) and the ground truth silhouette image (244).

7. The method according to claim 6, **characterized in that** providing (240) the ground truth silhouette image (244) comprises, providing a training data-point comprising the first digital image (204), and the ground truth silhouette image (244).

8. Computer implemented method for operating a computer controlled machine, in particular a robot, a vehicle, a domestic appliance, a power tool, a manufacturing machine, a personal assistant or an access control system, **characterized by** capturing (302) a digital image (304), in particular with a sensor (106), determining (306) a point cloud representation (308) of an object depending on the digital image (304), wherein the point cloud representation (308) comprises points that represent a view (310) of the object, determining (312) a voxel representation (314) of the object depending on the point cloud representation (308), wherein the voxel representation (314) comprises voxels that represent the view (310), mapping (316) the voxel representation (314) with a model, in particular a neural network (200) to a voxel representation (318) of the shape, determining (320) the shape depending on the voxel representation (318) of the shape, in particular with an artificial neural network that is configured to map the voxel representation (318) of the shape to the shape, and operating (322) the computer controlled machine (108) depending on the shape.

9. Device (100) for operating a computer controlled machine (108) or for training a model, in particular a neural network (200), for operating a computer controlled machine (108), **characterized in that** the device (100) comprises at least one processor (102), at least one memory (104), wherein the at least one processor (102) is configured to execute instructions that, when executed by the at least one processor (102) cause the device (100) to execute a method according to one of the preceding claims, wherein the at least one memory (104) comprises the instructions.

10. Computer program, **characterized in that** the computer program comprises computer readable instructions that, when executed by a computer, cause the computer to execute a method according to one of the claims 1 to 8.

104 | 106

102 | 110

100

108

Fig. 1

Fig. 2

EP 4 546 281 A1

Fig. 3

Europäisches
Patentamt
European
Patent Office
Office européen
des brevets

# EUROPEAN SEARCH REPORT

Application Number

EP 23 20 5632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VARLEY JACOB ET AL: "Shape completion enabled robotic grasping", 2017 IEEE/RSJ INTERNATIONAL CONFERENCE ON INTELLIGENT ROBOTS AND SYSTEMS (IROS), IEEE, 24 September 2017 (2017-09-24), pages 2442-2447, XP033266211, DOI: 10.1109/IROS.2017.8206060 [retrieved on 2017-12-13] | 1,3-10 | INV. G06V10/82 |
| Y | * Sections III, IV. * | 3-7 | |
| A | | 2 | |
| | ----- | | |
| X | LINQI ZHOU ET AL: "3D Shape Generation and Completion through Point-Voxel Diffusion", ARXIV.ORG, 11 April 2021 (2021-04-11), XP081934283, [retrieved on 2024-03-11] | 1-10 | |
| Y | * Sections, 1, 3, 4.2. * & ZHIJIAN LIU ET AL: "Point-Voxel CNN for Efficient 3D Deep Learning", ARXIV.ORG, CORNELL UNIVERSITY LIBRARY, 201 OLIN LIBRARY CORNELL UNIVERSITY ITHACA, NY 14853, 8 July 2019 (2019-07-08), XP081548294, * Sections 1-4. * | 3-7 | |
| | ----- | | TECHNICAL FIELDS SEARCHED (IPC) |
| | | | G06V G06T |
| Y | SHIN DAEYUN ET AL: "Pixels, Voxels, and Views: A Study of Shape Representations for Single View 3D Object Shape Prediction", 2018 IEEE/CVF CONFERENCE ON COMPUTER VISION AND PATTERN RECOGNITION, IEEE, 18 June 2018 (2018-06-18), pages 3061-3069, XP033476274, DOI: 10.1109/CVPR.2018.00323 [retrieved on 2018-12-14] * Section 4. * | 3-7 | |
| | ----- | | |

The present search report has been drawn up for all claims

| Place of search | Date of completion of the search | Examiner |
|---|---|---|
| The Hague | 13 March 2024 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)